# EUROPEAN PATENT APPLICATION

(11) **EP 0 629 803 A1**
(43) Date of publication of application: **21.12.1994**
(21) Application number: 94303889.3
(22) Date of filing: 27.05.1994
(51) Int. Cl.: F16K 17/194, F16K 1/32

(54) **Pressure relief valve arrangement**

(30) Priority: 01.06.1993 AU PL9117/93
(71) Applicant: MASTERFLO CORPORATION PTY. LTD., Dry Creek, Adelaide, South Australia 5094 (AU)
(72) Inventor: Masters, John, c/o Masterflo Corporation Pty Ltd., Adelaide, South Australia 5094 (AU)
(74) Representative: Stone, Patrick

(57) **Abstract**

A pressure relief valve unit for venting storage tanks for volatile liquids, comprising a pressure relief valve (12) having a primary valve member (15) having a frustoconical portion (16) seating in a tapered valve seat (19) in a valve body (14), the valve member being guided for movement by ribs (21) on the inside of a valve body, these ribs being cut away above the valve seat (19) to provide a drainage channel (40) all round the valve element permitting water drainage to a single drainage aperture in the valve body.

## Description

This invention relates to a pressure relief valve, and more particularly to a pressure relief valve arrangement for fitting to storage tanks of volatile liquids for venting of the storage tank.

Although this invention is suited to use with a wide variety of volatile liquids, one example is petroleum products. The invention will be described in the remainder of this specification in respect of an example of petroleum products, but it is to be appreciated that the scope of the invention is not restricted to this application.

It is common for petroleum products such as petrol, to be stored underground in large steel storage tanks. These storage tanks are normally vented to atmosphere so as to prevent an excessive pressure or vacuum building up in the tank, and also to provide a means of venting the tank during filling.

It is well known that evaporation takes place, even in underground storage tanks, and this evaporation can be extremely significant. The rate of evaporation depends upon the location of both the tanks and the vent pipes, prevailing climatic conditions including temperature and wind, and elevation above sea-level.

In most petroleum fuel tanks it is common to use a vent pipe which has a discharge point well above ground level. These vent pipes are normally fitted with an updraft vent cowl which directs the vapours upwardly and away from the discharge point of the vent pipe. However, updraft vent cowls, particularly where the cowl is situated in a windy location, often result in a slight vacuum being drawn on the storage container. This then causes continuous outward flow and further evaporation of fluid from within the storage tank.

It is well known to provide some form of valving arrangement on a vent pipe so as to provide the necessary pressure relief which at the same time preventing unnecessary vapour loss. An example of such a valve arrangement is known from Australian Patent Specification No. 559799. Such a valve arrangement typically comprises both a positive pressure relief valve and a vacuum relief valve.

In the above-numbered specification the positive pressure relief valve comprises a weighted ball seating on a sealing surface. Should a build up of pressure occur within the storage tank, the ball is designed to lift away from the sealing surface at a predetermined pressure, dependent on the weight of the ball, thereby relieving pressure within the tank.

The vacuum relief valve allows atmospheric air to flow into the storage tank should a vacuum be created. In the above-numbered specification, the second valve comprises a plate again seating on a sealing surface, which plate will lift in the event of a vacuum existing within the storage tank.

The known valve arrangement therefore provides a means of preventing build up of a vacuum in the storage tank as it is emptied, while at the same time allowing excessive pressure resulting from evaporation to be vented, and also at the same time allowing air to be discharged during the fill-in process.

The valve arrangement described in the above-mentioned Australian patent specification functions satisfactorily; however, there are still problems associated with the operation of such a valve. Obviously, the physical manufacture of the ball used in the primary valve is extremely difficult to achieve, particularly in relation to the fine tolerances required to ensure proper sealing. Therefore, it is more advantageous to make use of a cylindrical moving valve element which has at one end a frusto-conical surface which engages within a seat. In order to centre such a moving valve element within the body, a plurality of ribs extend from the internal surface of the body to act as guides for centering the moving valve element within the upper surface of the body. The dimensions of the ribs provide a sliding fit of the moving valve element within the upper portion of the body.

However, with such an arrangement there is a problem arising with drainage of condensation from within this portion of the body, and also problems associated with the freezing of moisture around the sealing surface, which is liable to prevent movement of the valve element. Therefore, it is one object of this invention to overcome this particular problem, and to provide a valve body which allows effective drainage, and also an arrangement which prevents locking of the valve body through freezing of any moisture in the vicinity of sealing surfaces.

Another difficulty with the known valving arrangement is the relatively large pressures which must build up within the storage tank before relief of the pressure occurs. The primary valve elements normally have a high mass which results in a relatively high threshold pressure. This is not normally a problem in relation to venting should there be either a rapid increase in pressure for some reason or a requirement for venting to atmosphere during the filling process. However, in normal day-to-day activities there is often a minor variation above and below atmospheric pressure which may result in failure of pressure venting in the arrangement known from the above-mentioned Australian patent specification.

It is therefore another object of this invention to provide a means of venting minor pressure variations.

In a still further problem with the above-mentioned known valving arrangement, there is a tendency for minor amounts of condensation to gather around the seating surfaces of the primary valve. In the known valve arrangement, the primary valve element closes by moving downwardly on to the seat, and opens by moving upwardly. In some instances, the movement of vapour through the valve will result in a cooling effect which, in turn, causes condensation to form within the valve.

This condensation can, in fact, due to the shape of the primary valve element, gather in the vicinity of the sealing surface, and if the environmental conditions are cold enough, or if the vapour movement itself has resulted in rapid cooling, then this condensate may in fact freeze, thereby effectively fixing the valve body to the seat. Clearly, in the circumstances, the valve may fail to operate at the required pressure.

A further object of this invention is to provide for efficient drainage at the primary valve, including minor amounts of condensation.

When there is a minor pressure build up, which does not operate the primary valve, then it is possible for this pressure to cause leakage through the seams of the storage tank. Obviously, such storage tanks are normally fabricated using welded seams, but it is often impossible to guarantee that there will be no form of leak, particularly of the pin-hole variety. If such a pin-hole aperture exists within a constructed tank, then any elevation in pressure will result in leakage from the tank. Apart from the loss of fluid, this results in an extremely dangerous or possibly explosive circumstance around the tank.

The present invention also aims to provide a solution to this problem.

According to one aspect of the present invention, there is provided a drainage channel which surrounds the primary valve element to allow water flow from any point around the valve element to exit from a single drainage aperture.

In the case where a series of ribs are used which project outwardly from the inward wall of the valve body for central location and sliding movement of the primary valve element, there will exist a plurality of spaces between adjacent ribs which would normally each require a separate aperture through the valve body for drainage purposes. However, in order to make use of a single drainage aperture, a channel or groove is formed around the lower portion of the inside valve body, such that the various spaces between ribs are connected to allow drainage from the single aperture.

Preferably, the channel or groove has a flat surface which is inclined or tilted towards the drainage aperture so as to encourage fluid flow towards the drainage point.

According to a further aspect of this invention, the primary valve element comprises a cylindrical member having at its lower end a frusto-conical portion, said frusto-conical portion being designed to engage a seat for sealing purposes, and also having at least one surface recess or indentation on the frusto-conical surface adjacent where said frusto-conical surface abuts against said seat, such that any moisture lying around the primary valve element between the frusto-conical surface and the seat will preferentially gather within said at least one recess or indentation.

According to this aspect of the invention, instead of a bead of water forming continuously around the diameter of the frusto-conical section, the provision of a recess or indentation will cause water to drain into it, thereby preventing a continuous bead of water around the seal. Should freezing conditions occur, then there is much less likelihood of the primary valve element bcoming fixed to the seat by the freezing of water within a localised indentation or recess.

Preferably, a plurality of such recesses are formed, and the recesses may comprise a plurality of longitudinal channels having a curved cross-section. These longitudinal channels may extend across the full width of the frusto-conical surface.

In a still further aspect of this invention, a low pressure relief valve is incorporated within the primary valve element, said low pressure relief valve comprising a conduit formed within said primary valve element connecting an internal region of the valve with atmosphere, a valve element located within said conduit which is free to move therein, and a valve seat located within the end of the conduit that is located internally within the valve body, said seal having a small aperture therethrough, which is covered by the valve element when there is no pressure differential across the low pressure relief valve or which lifts away from the seal in the event of a pressure differential, so that air or vapour movement may occur through the low pressure relief valve.

Preferably, the valve element comprises a small steel ball, and the seal comprises a threaded insert having a small aperture therethrough. The end of the threaded insert may have a depression centrally located therein within which the steel ball may locate for effective sealing.

Preferably, the aperture through the seal is of a sufficiently small size to allow minor pressure differences to be equialised without the requirement of a large flow rate.

In respect of the above-described aspects of the invention, the primary valve element described is designed for relief of pressure build-up within the storage tank.

In the case of a vacuum and relief of that vacuum, then similar features can be used, but the configuration of the primary valve element will be different so as to allow relief of the vacuum. For example, the primary valve element will be designed so that it lifts under the influence of the vacuum so as to allow outside air to relieve the vacuum, and the low pressure relief valve will be positioned such that the seal is positioned on the atmospheric side of the conduit so as again to allow a low flow ingress of atmospheric air to equalise small vacuums which may occur within the storage tank.

A practical embodiment of pressure relief valve unit in accordance with the invention will now be described by way of example, making reference to the accompanying drawings, in which:-
- Figure 1: shows a cross-sectional view of a pressure relief valve;
- Figure 2: shows a primary valve element for relief of positive pressure from within a storage container, in Figure 2(a) in elevation, in Figure 2(b) in cross-section and in Figure 2(c) in plan; and

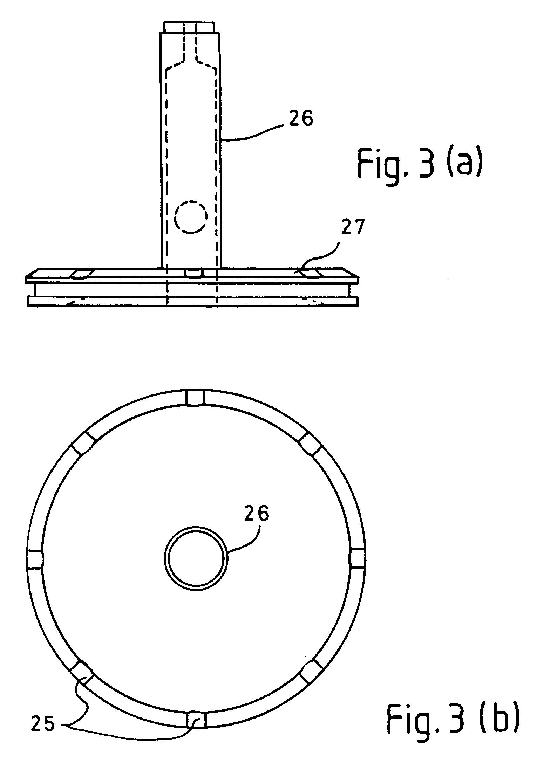

- Figure 3: shows a primary valve element for relief of a vacuum from within a storage tank, in Figure 3(a) in elevation and in Figure 3(b) in plan.

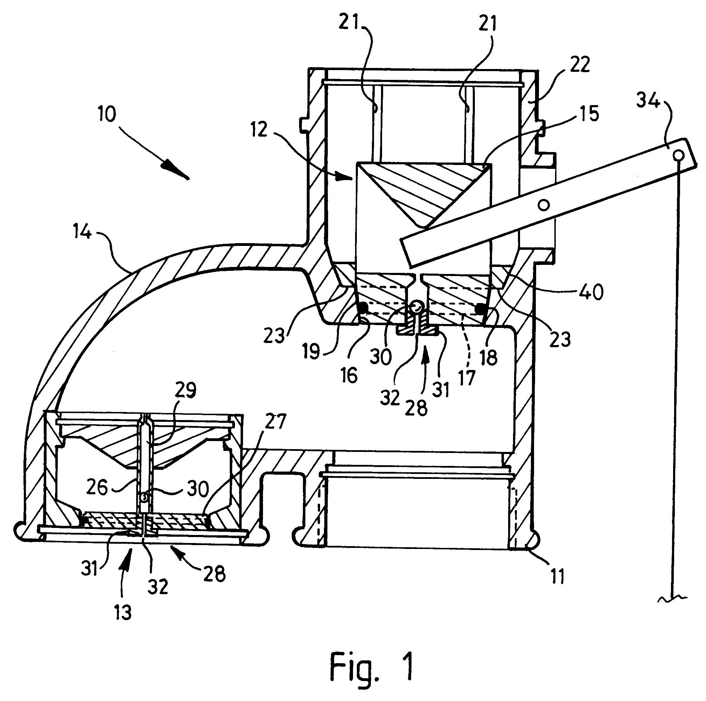

Figure 1 shows the basic construction of a pressure relief valve unit 10, which comprises an attachment 11 for securing the pressure relief valve 10 to the end of a vent of the storage tank, a positive pressure relief valve 12 and a vacuum relief valve 13.

The positive pressure relief valve 12 comprises a primary valve element 15 which is generally cylindrical apart from a frusto-conical lower end 16. The frusto-conical surface 16 is provided with an annular recess 17 within which an O-ring 18 locates for sealing purposes. The primary valve element 15 locates within a seat 19 that is formed in a valve body 14.

As above-mentioned, the primary valve element 15 is of a generally cylindrical nature, and the portion 22 of the valve body 14 within which the primary valve element 15 locates is provided with a plurality of ribs 21 which project outwardly from the internal surface of the portion 22. These ribs 21 are evenly spaced circumferentially around the outlet portion 22 of the valve body 14, and are arranged to provide a sliding fit with respect to the primary valve element 15, so as to maintain it centrally located within the outlet portion 22.

In this embodiment, the valve body 14 is cast and, therefore, the ribs 21 would normally extend from the upper portion of the outlet 22 to the edge of the seat 19. In this form, if the primary valve element 15 were to locate on the seat 19, then there may not be sufficient clearance between the ribs 21 and the outer surface of the primary valve element 15 to allow adequate drainage of condensate, which would therefore accumulate between adjacent ribs 21. In order to prevent this, after the casting process of the valve body 14, the lower end of each of the ribs 21 is machined back to the internal wall of the outlet portion 22, so as to provide a clear channel for water drainage from around the base of the primary valve element 15. Therefore, it is necessary only to provide one drainage aperture in the valve body 14, which overall results in a reduced number of machining operations.

The ribs 21 are machined so as to provide a ridge 23 which is an annulus that extends around the circumference of the primary valve element 15. This ridge 23 is angled with respect to the horizontal such that its lowest point is adjacent the drainage aperture. This sloping of the ridge surface 23 encourages rapid drainage through the single drainage aperture.

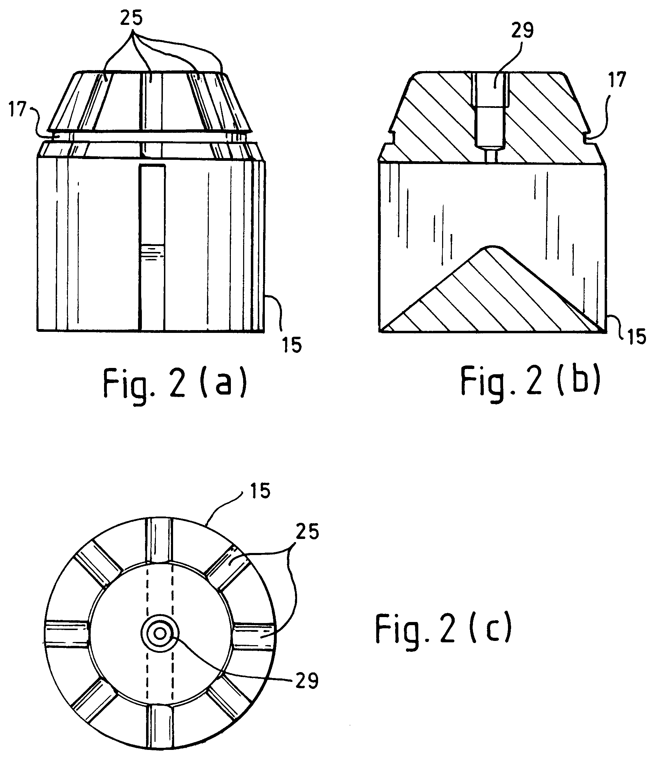

Clearly, there remains a possibility of some condensate forming between the frusto-conical surface 16 and the seat 19. If the cross-sectional shape of the frusto-conical surface 16 was simply circular, then if condensate were to form between these surfaces, it would do so as a bead of water that extended around the full circumference of the primary valve element 15. Under certain flow conditions, or freezing environmental conditions, then this bead of water may freeze, thereby fixing the primary valve element 15 to the seat 19. In order to overcome this difficulty, as shown in Figure 2, a plurality of longitudinal recesses 25 are formed across the frusto-conical surface 16. These longitudinal recesses 25 have a curved cross-section, and in this embodiment are approximately 4mm wide and 1mm deep.

Through the action of surface tension, any condensate locating between the frusto-conical surface 16 and the seat 19 will be drawn into the longitudinal recesses 25. If sufficient longitudinal recesses 25 are provided, then the reservoir afforded by each recess 25 will be sufficient to store a reasonably large amount of condensate. This condensate will primarily be held away from the seat 19, and therefore if freezing occurs, the primary valve element 15 will still be able to operate safely. Even if condensate which gathers within the longitudinal recesses 25 comes into contact with the seat 19, the localised freezing will not result in a significant adherence force around the perimeter of the seat 19, and again the primary valve element 15 will operate satisfactorily.

In addition to the primary valve element 15 having longitudinal recesses 25 formed therein, the primary valve element 26 of the later described vacuum relief valve 13 may also be provided with longitudinal recesses such as recess 25, which of course operate in the same manner as described above.

The primary valve element 15 operates to relieve excessive pressure building up within the storage tank. The point at which this pressure relief occurs is dependent upon the weight and cross-sectional surface area of the primary valve element 15. Once a predetermined pressure point is reached, then the primary valve element will be lifted clear of the seat 19, thereby allowing pressure relief. Once the pressure has decreased, then the primary valve element 15 will once again lower and seal against the seat 19.

Likewise, should a vacuum be created within the storage tank, then the primary valve element 26 including bottom plate 27 of the vacuum relief valve 13 will raise, thereby allowing air to enter the storage tank. Again, once the vacuum has been relieved, then the primary valve element 26 will lower and reseal.

Obviously, as a result of the weight of both the primary valve elements 15 and 26, the pressure or vacuum upon which they will operate can be set at reasonably high levels. However, there is still a need for relief of much lower pressures or vacuums, and therefore there is provided in each of the primary valve elements 15 and 26 a low pressure (or vacuum) relief valve 28. As shown in Figure 1, each such valve 28 comprises a conduit 29 which extends through the primary valve element 26 (or 15), a movable valve element which in this embodiment is a steel ball 30 and a seat 31 which locates within an end of the conduit 29.

The seat 31 comprises a threaded element which has a relatively small aperture 32 therethrough. This small aperture 32 allows for a minor flow through the low pressure relief valve 28 so as to relieve any minor pressure build up or any minor vacuum that may occur. The inside end of the seat 31 has a depression therein within which the steel ball 30 locates for sealing purposes. In the event of a pressure build up, then the low pressure relief valve 28 in the primary valve element 15 will operate, whereby the steel ball 30 lifts off the aperture 32, thereby allowing flow at a low rate from within the valve body 14 to atmosphere. In the event of a minor vacuum forming, then the low pressure relief valve 28 in the primary valve element 26 will operate, whereby the steel ball 30 lifts, allowing air from atmosphere to flow at low rate into the valve body 14.

Upon the equalisation of pressure, the low pressure relief valves 28 will again close.

Finally, the pressure relief valve 10 is provided with a manual operating arm 34 which can be used manually to raise the primary valve element 15. This manual operation may be used during the filling process of the storage tank so as to maximise air discharge from the storage tank during the filling process.

From consideration of the above description, it will be clear that the described arrangement in accordance with the invention offers significant improvements in operation of such pressure relief valve arrangements known from the prior art.

## Claims

1. A pressure relief valve arrangement for venting volatile liquid storage tanks, comprising a pressure relief valve (12) having a primary valve element (15) comprising a cylindrical portion and a frusto-conical portion (16) seating in a tapered valve seat (19) in a valve body (14) incorporating a port (11) for fitting to the tank vent, characterised in that the primary valve element is surrounded by a drainage channel (40) providing for drainage of water from any point around the valve element to a single drainage aperture.

2. An arrangement according to claim 1, characterised in that the cylindrical portion of the primary valve element is guided by means of ribs (21) for movement in the valve body (14), the said drainage channel interconnecting the spaces between the ribs.

3. An arrangement according to claim 2, characterised in that the ribs are provided on the inside wall of a cast valve body, and have regions machined away above the valve seat (19) to provide the drainage channel (40).

4. An arrangement according to claim 1 or claim 2 or claim 3, characterised in that the drainage channel (40) has a flat surface inclined towards the drainage aperture.

5. An arrangement according to any of claims 1 to 4, characterised in that the frusto-conical portion (16) has at least one water collection recess or indentation (25) for receiving condensate locating between the frusto-conical surface and the valve seat (19).

6. An arrangement according to any of claims 1 to 5, characterised in that the valve body (14) also incorporates a vacuum relief valve (13).

7. An arrangement according to claim 6, characterised in that the vacuum relief valve (13) comprises a primary valve element having a stem (26) and a bottom plate (27) seating on a sealing surface.

8. An arrangement according to any of claims 1 to 7, characterised in that the pressure relief valve (12) incorporates in the primary valve element (15) a secondary valve (28) for low differential pressure relief.

9. An arrangement according to claim 8, characterised in that the valve element of the vacuum valve also incorporates a secondary valve (28) for low differential vacuum relief.

10. An arrangement according to claim 8 or claim 9, characterised in that the or each secondary valve (28) is constituted by a valve seat (31) accommodated in a conduit in the primary valve element, the seat having a bleed aperture (32) normally closed by a ball-shaped movable valve element (30).
